(19) Europäisches Patentamt
European Patent Office
Office européen des brevets

(11) **EP 1 798 693 A1**

(12) **EUROPEAN PATENT APPLICATION**

(43) Date of publication:
**20.06.2007 Bulletin 2007/25**

(51) Int Cl.:
***G07D 7/12*** *(2006.01)*     ***G07D 7/00*** *(2006.01)*

(21) Application number: **06025264.0**

(22) Date of filing: **06.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.12.2005 JP 2005365061**

(71) Applicant: **KABUSHIKI KAISHA TOSHIBA**
**Tokyo 105-8001 (JP)**

(72) Inventors:
• **Uno, Teruhiko**
**Minato-ku**
**Tokyo 105-8001 (JP)**

• **Sato, Masamichi**
**Minato-ku**
**Tokyo 105-8001 (JP)**
• **Watanabe, Shinya**
**Minato-ku**
**Tokyo 105-8001 (JP)**
• **Uchida, Hidekatsu**
**Minato-ku**
**Tokyo 105-8001 (JP)**

(74) Representative: **HOFFMANN EITLE**
**Patent- und Rechtsanwälte**
**Arabellastrasse 4**
**81925 München (DE)**

(54) **Paper sheet discrimination apparatus, paper sheet processing apparatus, and paper sheet discrimination method**

(57)     A paper sheet processing apparatus has an inspection unit which optically detects paper sheets. The inspection unit has a plurality of image sensing units (21 to 23) and a signal processing unit (30). A sensing CPU (20) of the signal processing unit (30) detects image data of paper sheets via the image sensing units (21 to 23), reads a correction coefficient stored in advance for each type of paper sheets in a memory (200), and discriminates the paper sheets on the basis of the image data detected by using the correction coefficient.

FIG. 1

**Description**

The present invention relates to a paper sheet discrimination apparatus which discriminates levels of taint damage or true/false by inspecting paper sheets, a paper sheet processing apparatus having the paper sheet discrimination apparatus, and a paper sheet discrimination method.

Generally, paper sheet discrimination apparatuses determine a criterion for levels of taint damage of paper sheets as follows. That is, differences among discrimination levels according to individual differences among apparatuses are corrected by feeding media for adjustment or paper sheets themselves prepared for adjustment into the apparatuses, (for example, refer to Jpn. Pat. Appln. KOKAI Publication No. 2003-99837).

For example, when there are five types of paper sheets to be discrimination objects, the following three methods can be thought of as a method for correcting discrimination levels.

In a first method, the five types of paper sheets are fed in units of 1000 sheets of each type in four different directions (surface forward, surface backward, back forward, and back backward), frequency distribution data (histograms) of a total of twenty types of taint damage quantities are collected, and criteria for discrimination levels of taint damage according to the frequency distribution data are determined.

In a second method, five types of media for adjustment whose characteristics optically approximate unused paper sheets to be discrimination objects are manufactured, and the media are fed into the apparatus to collect frequency distribution data. Then, criteria for discrimination levels of taint damage are determined by presuming a case in which the media are deteriorated and stained on the basis of the distribution data of the media for adjustment.

Further, in a third method, ten types of media for adjustment in a reproduced state in which the media are tainted and damaged are manufactured per one type of the paper sheets, and a total of fifty types of media for adjustment are fed into the apparatus to collect frequency distribution data thereof. Then, criteria for discrimination levels of taint damage are determined on the basis of the distribution data of the plurality of media with different levels of taint damage.

In accordance with the first method, however, there are optical variations in the paper sheets themselves. Further, the media deteriorate with use, and stain conditions damage is shifted from the initial stain conditions damage, and consequently, it is impossible to continuously maintain correct criteria.

In accordance with the second method, it is possible to maintain the quality of the media for adjustment by periodical replacement. However, it is difficult to manufacture media for adjustment whose optical characteristics are completely equivalent to those of paper sheets to be discrimination objects, and it is impossible to highly precisely correct a plurality of apparatuses with different characteristics.

Moreover, in accordance with the third method, it is possible to maintain the quality of the media for adjustment in the same manner as in the second method. However, it is difficult to manufacture media for adjustment more than the second method, and it is impossible to highly precisely correct the apparatuses.

An object of the present invention is to provide a paper sheet discrimination apparatus which can easily and precisely correct variations in discrimination performances among apparatuses, as well as a paper sheet processing apparatus and a paper sheet discrimination method.

In order to achieve the above object, a paper sheet discrimination apparatus according to one embodiment of the invention comprises: a detection unit which optically detects paper sheets; a discrimination unit which discriminates stain conditions of the paper sheets on the basis of a detection result by the detection unit; and a storage unit in which a correction coefficient for correcting variations in discrimination performances between different apparatuses is stored in advance for each type of the paper sheets, wherein the correction coefficient is prepared for each type of the paper sheets by using a correlation between a detection result obtained by detecting a specific type of reference paper sheets by the detection unit of an apparatus serving as a standard for correction, and a detection result obtained by detecting the reference paper sheets by the detection unit of the apparatus to be a correction object, and the discrimination unit reads a correction coefficient corresponding to a type of the paper sheets detected by the detection unit from the storage unit, and discriminates stain conditions of the paper sheets by using the correction coefficient.

Further, a paper sheet processing apparatus according to another embodiment of the invention comprises: a throw-in unit in which plural paper sheets are thrown; a fetching unit which fetches the thrown paper sheets one by one on a carrier path; a carrier unit which carries the fetched paper sheets; a detection unit which optically detects the carried paper sheets; a discrimination unit which discriminates stain conditions of the paper sheets on the basis of a detection result by the detection unit; a storage unit in which a correction coefficient for correcting variations in discrimination performances between different apparatuses is stored in advance for each type of the paper sheets, and sorting and collecting units which sort and collect the paper sheets on the basis of a discriminated result by the discrimination unit, wherein the correction coefficient is prepared for each type of the paper sheets by using a correlation between a detection result obtained by detecting a specific type of reference paper sheets by the detection unit of an apparatus serving as a standard for correction, and a detection result obtained by detecting the reference paper sheets by the detection unit of the apparatus to be a correction object, and the discrimination unit reads a correction coefficient corresponding to a type of the paper sheets detected by the detection unit from the storage unit, and discriminates stain conditions of the paper sheets by using the correction coefficient.

Furthermore, a paper sheet discrimination method according to still another embodiment of the invention comprises: a storage step of storing a correction coefficient in an apparatus serving as a standard for correction, which is calculated in advance for each type of paper sheets by using a correlation between a detection result obtained by detecting a specific type of reference paper sheets by the detection unit of the apparatus, and a detection result obtained by optically detecting the reference paper sheets by the detection unit of the apparatus to be a correction object, and a detection step of optically detecting paper sheets by the detection unit of the apparatus; and a discrimination step of reading a correction coefficient stored in advance in the storage step so as to correspond to a type of the paper sheets detected in the detection step, and of discriminating stain conditions of the paper sheets by correcting a detection result in the detection step by using the correction coefficient.

The invention can be more fully understood from the following detailed description when taken in conjunction with the accompanying drawings, in which:

FIG. 1 is a schematic diagram showing a paper sheet processing apparatus according to an embodiment of the present invention;
FIG. 2 is a block diagram showing a control system for controlling operations of the processing apparatus of FIG. 1;
FIG. 3 is a schematic diagram showing a configuration of an inspection unit built into the processing apparatus of FIG. 1;
FIG. 4 is a view schematically showing one example of an image sensing unit in the inspection unit of FIG. 3;
FIG. 5 is a block diagram showing a circuit configuration of a signal processing unit built into the inspection unit of FIG. 3;
FIG. 6 is a graph showing spectral characteristics of respective components of the image sensing unit of FIG. 4;
FIG. 7 is a histogram showing intensity distributions of outputs of respective color signals;
FIG. 8 is a graph in which outputs of red signals are compared by different apparatuses;
FIG. 9 is a graph showing a state in which peaks of respective data of FIG. 8 are superimposed on each other;
FIG. 10 is a graph for explanation of differences in signal levels among the apparatuses due to differences in types of paper sheets;
FIG. 11 is a graph showing spectral characteristics of two types of filters having different cut-off characteristics in comparison with each other;
FIG. 12 is a graph showing data characteristics corresponding to types of paper sheets and cut-off wavelengths; and
FIG. 13 is a graph showing one example of a correction coefficient table by using the types of paper sheets and the spectral characteristics of an optical system as parameters.

DETAILED DESCRIPTION OF THE INVENTION

Hereinafter, an embodiment of the present invention will be described in detail with reference to the drawings.

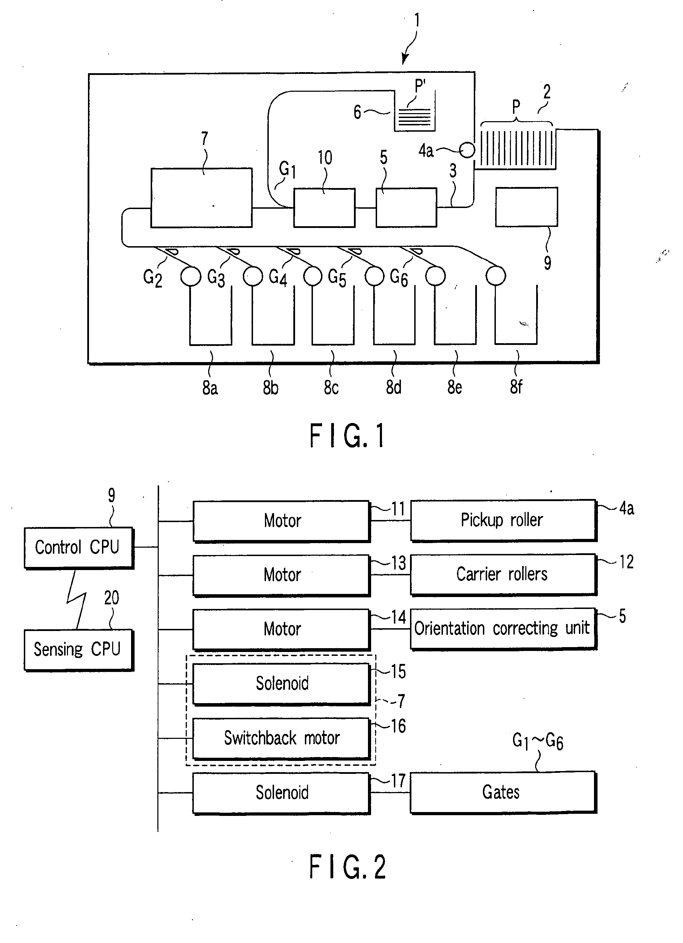

FIG. 1 shows a schematic diagram of a paper sheet processing apparatus 1 (hereinafter simply called a processing apparatus 1) according to an embodiment of the invention.
The processing apparatus 1 has a throw-in unit 2, a fetching unit 4, an orientation correcting unit 5, an inspection unit 10 (a paper sheet discrimination apparatus), an excluding and collecting unit 6, a direction changing unit 7, a plurality of sorting and collecting units 8a to 8f, and a control CPU 9. A plurality of paper sheets P to be inspection objects are thrown in the throw-in unit 2. The fetching unit 4 fetches thrown paper sheets P one by one onto a carrier path 3. The orientation correcting unit 5 corrects a carrying orientation of the paper sheets P fetched on the carrier path 3. The inspection unit 10 inspects the paper sheets P having passed through the orientation correcting unit 5. The excluding and collecting unit 6 collects paper sheets P' which have been discriminated as nonresusable on the basis of an inspection result in the inspection unit 10. The direction changing unit 7 uniforms the surface and under surface, and aspects of the top and bottom of the paper sheets P which have been discriminated as usable in the inspection unit 10. The plurality of sorting and collecting units 8a to 8f sort and collect the paper sheets P having passed through the direction changing unit 7 for each type thereof. The control CPU 9 controls operations of the entire processing apparatus 1.
FIG. 2 shows a block diagram of a control system which controls operations of the processing apparatus 1.
A fetching motor 11, a carrier motor 13, an orientation correcting motor 14, a solenoid 15, a switchback motor 16 and a plurality of solenoids 17 are connected to the control CPU 9 of the processing apparatus 1. The fetching motor 11 rotates a pickup roller 4a of the fetching unit 4. The carrier motor 13 rotates a plurality of carrier rollers 12 for carrying paper sheets P fetched on the carrier path 3. The orientation correcting motor 14 operates the orientation correcting unit 5. The solenoid 15 operates a gate (not shown) of the direction changing unit 7. The switchback motor 16 rotates a switchback roller (not shown) in the both forward and backward directions. The plurality of solenoids 17 respectively operate a plurality of gates G1 to G6 provided on the carrier path 3. Further, the control CPU 9 is connected to a sensing CPU 20 of the inspection unit 10 described above.

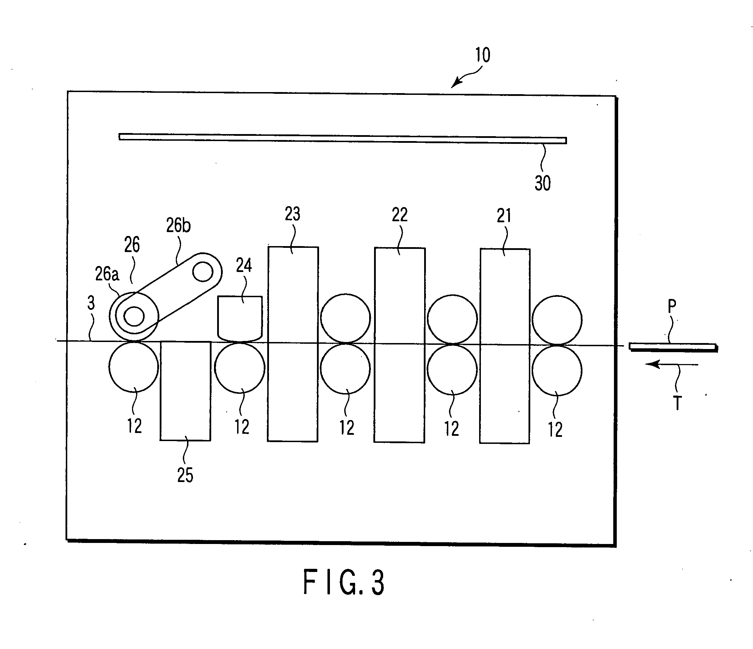

FIG. 3 shows a schematic diagram with the inspection unit 10 enlarged.

The inspection unit 10 has the plurality of carrier rollers 12 on the carrier path 3 on which the paper sheets P are carried. The plurality of carrier rollers 12, on which a plurality of endless carrier belts (not shown) are wound around, are rotated by the carrier motor 13, function as a carrier unit of the invention.

On the carrier path 3, a transparent image sensing unit 21, a top surface reflected image sensing unit 22, an under surface reflected image sensing unit 23, a magnetic sensing unit 24, a fluorescence sensing unit 25, and a thickness sensing unit 26 are provided in the order from the right side in the drawing. The transparent image sensing unit 21 senses image information included in light that has passed through the paper sheets P. The top surface reflected image sensing unit 22 senses image information included in light reflected from the top surface of the paper sheets P in the drawing. The under surface reflected image sensing unit 23 senses image information included in light reflected from the under surface of the paper sheets P in the drawing. The magnetic sensing unit 24 senses magnetic characteristics included in inks printed on the paper sheets P. The fluorescence sensing unit 25 senses a feature quantity of fluorescent materials included in inks printed on the paper sheets P. The thickness sensing unit 26 senses a thickness of the paper sheets P. Further, a signal processing unit 30 which processes detection signals detected via the respective sensing units 21 to 26 is installed in the upper portion in the casing of the inspection unit 10 in the drawing.

The transparent image sensing unit 21, the top surface reflected image sensing unit 22, and the under surface reflected image sensing unit 23 function as a detection unit of the invention. Such a detection unit is, for example, a one-dimensional image scanner sensor with a halogen light source serving as a light emitting unit, and a photodiode array or a charge coupled device (CCD) serving as a light receiving unit. The magnetic sensing unit 24 is, for example, a sensor such as a magnetic head, in which a direct bias current is applied to a primary side of a core material, and a change in a flux when a magnetic material passes through the head portion is detected by a secondary side coil. Further, the fluorescence sensing unit 25 is, for example, a sensor having the light emitting unit as an ultraviolet light emitting lamp, the sensor detecting excitation light emitted from a medium by means of a photodiode. The thickness sensing unit 26 is, for example, configured such that the paper sheets P are pinched between the carrier rollers 12 and a pinch roller 26a, and a variation in the pinch roller 26a or a shaft 26b supporting the pinch roller is sensed by a displacement sensor (not shown) or the like to be converted into an electrical signal.

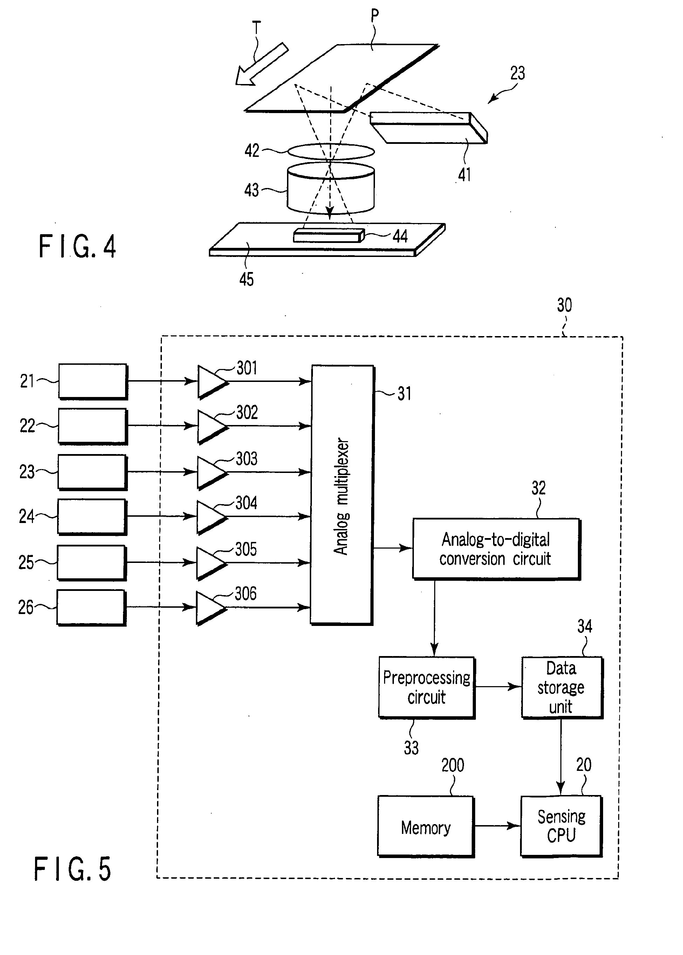

FIG. 4 exemplifies a schematic configuration of the under surface reflected image sensing unit 23 as one example of an image sensing unit which senses image information included in light reflected from the paper sheets P or light passing through the paper sheets P. Note that, in addition thereto, there are the transparent image sensing unit 21 and the top surface reflected image sensing unit 22 as an image sensing unit built in the inspection unit 10.

As shown in FIG. 4, the paper sheets P carried in a direction of arrow T in the drawing via the carrier path 3 are illuminated by a light source 41 such as a halogen lamp, and reflected light from the paper sheets P is shone onto a light receiving unit 44 constituted by a photodiode array or a charge coupled device (CCD) via a wavelength range limiting filter 42 (hereinafter simply called an optical filter 42) and an optical lens 43. The image information received at the light receiving unit 44 to be converted from the optical information into an electrical signal is signal-amplified at a preamplifier unit 45.

FIG. 5 shows a block diagram of a circuit configuration of the above-described signal processing unit 30 which processes, for example, a signal amplified at the preamplifier unit 45.

In FIG. 5, the transparent image sensing unit 21, the top surface reflected image sensing unit 22, the under surface reflected image sensing unit 23, the magnetic sensing unit 24, the fluorescence sensing unit 25, and the thickness sensing unit 26 which are connected to the signal processing unit 30 denote the sensing units 21 to 26 illustrated in FIG. 3, respectively.

In the signal processing unit 30, signals (sensed data) output from the sensing units 21 to 26 pass through analog processing circuits 301 to 306 such as an operational amplifier, and amplification/process onto signal components are carried out. These six-system analog signals are time-shared into a single system analog signal by an analog multiplexer 31, and thereafter, the signal is converted into, for example, 10-bit digital data in an analog-to-digital conversion circuit 32.

In the present embodiment, the analog signals are time-shared to be a single system by the analog multiplexer 31 in order to make the analog-to-digital conversion circuit 32 be a single system. However, all sensed signals may be respectively digitized independently in accordance with a way of assembling the system or under a condition of the hardware.

Then, preprocessing (for example, space differential, equation, or the like) according to the sensed contents are applied onto the sensed data converted into the digital data in a preprocessing circuit 33, and the data are stored in a data storage unit 34.

The sensing CPU 20 serving as an arithmetic processing unit as typified by a microcomputer appropriately reads sensed data from the data storage unit 34, and determines types, aspects, true/false, levels of taint damage, and the like of the paper sheets P. In particular, the sensing CPU 20 reads correction coefficients (which will be described later) corresponding to types of the paper sheets P stored in advance in a memory 200 (storage unit), and corrects output signals from the image sensing units 21, 22, and 23 by using the correction coefficients. Note that the sensing CPU 20 functions as a discrimination unit of the present invention.

Further, the sensing CPU 20 notifies a higher-level device, i.e., the control CPU 9 of the processing apparatus 1 of the sensed result (FIG. 2). On the basis of information on types, aspects, true/false, levels of taint damage, and the like, which are output from the inspection unit 10 in this way, the control CPU 9 makes a control to switch the gates G1 to G6 to carry the paper sheets P respectively to the sorting and collecting units 8a to 8f (and the excluding and collecting unit 6) into which the paper sheets are to be collected. For example, the paper sheets P determined to have levels of taint damage to an extent of nonreusable by the sensing CPU 20 are excluded to the excluding and collecting unit 6 under the control of the control CPU 9.

Meanwhile, the sensing CPU 20 determines levels of taint damage of the paper sheets P in the following manner. That is, the sensing CPU 20 determines overall, not only stain conditions of the paper sheets P by image data, and thin spots in printed parts, but also discriminations for wrinkles, bent corners, holes, and the like, and sensing of tapes and foreign matters by a thickness sensor, and outputs final determined results. In particular, when stain conditions of the paper sheets P are determined, reflected images and transparent images using the optical system described above are used. Specifically, in this case, the sensing CPU 20 discriminates stain conditions of the paper sheets P by using image data sensed by the transparent image sensing unit 21, the top surface reflected image sensing unit 22, and the under surface reflected image sensing unit 23.

Namely, when stain conditions of the paper sheets P are determined, it is recommended that an optical system which is close to human eyes is used. If a correlation between the stain conditions seen by human eyes and the image information obtained via the optical system is made clear, it is possible to determine stain equivalent to human sensation.

Note that the optical system of the respective image sensing units 21, 22, and 23 has a function of sensing an image in an ultraviolet region or an infrared region which cannot be seen by the human eye in order to discriminate the real/false of the paper sheets P, whereas the present embodiment is absolutely designed to sense an image in a region of a visible image (generally regions of three primary colors of red, blue, and green). However, the same effect as that which will be described hereinafter, can be obtained even in an ultraviolet region or an infrared region depending on characteristics of parts configuring the optical system. For this reason, a wavelength region is not limited to a visible region.

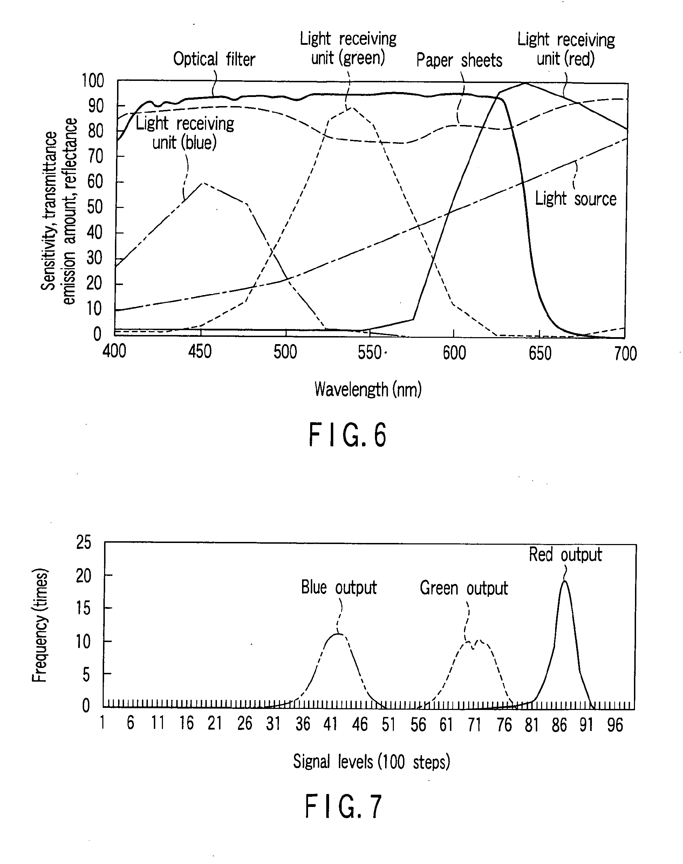

FIG. 6 shows, as one example of the image sensing unit described above, spectral characteristics of the respective components (including the paper sheets P) of the under surface reflected image sensing unit 23 described in FIG. 4. In particular, FIG. 6 is a graph showing one example of respective spectral characteristics of a color CCD as one example of the light receiving unit 44, an infrared cutoff filter as one example of the optical filter 42, a halogen light emitter as one example of the light source 41, and the paper sheets P. In this graph, the abscissa denotes wavelength in the visible region, and the ordinate denotes spectral sensitivity characteristics of the color CCD sensor, spectral transmittance characteristics of the infrared cutoff filter, spectral emission amount characteristics of the halogen light emitter, and spectral reflectance.characteristics of the paper sheets P.

Because the color CCD sensor and the halogen light emitter are normalized respectively at a maximum value of a red sensor and at a maximum value within an infrared region (not shown), the respective characteristic values are not absolute values. In addition thereto, the optical lens 43 also has spectral transmittance characteristics, which are substantially flat characteristics within a visible region. For this reason, this is not taken into consideration in the present embodiment. However, there is the possibility that the optical lens 43 is taken into consideration in the design in actual product development.

Hereinafter, a process of acquiring color image data of the paper sheets P in the under surface reflected image sensing unit 23 will be described with reference to the spectral characteristics of FIG. 6.

As shown in FIG. 4, the paper sheets P are carried and illuminated with light from the light source 41, and reflected light therefrom is received at the CCD light receiving unit 44 (red, green, blue) via the optical filter 42 and the optical lens 43. When the reflected light is photoelectrically converted in the light receiving unit 44, voltage levels of the red, green, and blue respective signals obtained as electrical signals can be expressed by integration values of the spectral characteristics of the respective components shown in FIG. 6. More specifically, when the spectral characteristics at wavelengths of the respective components are shown as follows:

Spectral sensitivity characteristics of CCD sensor (blue) $RB_i$ (i: 400 to 700 nm)
Spectral sensitivity characteristics of CCD sensor (green) $RG_i$ (i: 400 to 700 nm)
Spectral sensitivity characteristics of CCD sensor (red) $RR_i$ (i: 400 to 700 nm)
Spectral transmittance characteristics of optical filter $F_i$ (i: 400 to 700 nm)
Spectral emission amount characteristics of halogen light emitter $L_i$ (i: 400 to 700 nm)
Spectral reflectance characteristics of paper sheets P $O_i$ (i: 400 to 700 nm),
outputs of the RGB sensors can be expressed by:

(1) Outputs of CCD sensor (blue) $Db = \Sigma_{i=400}^{700} Rb_i \times F_i \times L_i \times O_i$

(2) Outputs of CCD sensor (green) Dg = $\Sigma i = 400$ to $700$ RGi $\times$ Fi $\times$ Li $\times$ Oi

(3) Outputs of the CCD sensor (red) Dr = $\Sigma i = 400$ to $700$ RRi $\times$ Fi $\times$ Li $\times$ Oi

wherein the above-described Db, Dg, and Dr are merely ratios of levels of the three color signals. In practice, output voltages are determined on the basis of a gain of the analog lamp, absolute sensitivities of the respective components, and absolute emission amounts.

When a type of the paper sheets P to be measuring objects is changed, it is possible to find RGB sensor outputs of the paper sheets P if the spectral reflectance characteristic of the paper sheets P, i.e., Oi in the above formula, is changed. Further, as described above, it sufficient to add "xTi" to the above formulas when the spectral transmittance characteristic (Ti) of the optical lens 43 is taken into consideration.

FIG. 7 shows one example of frequency distributions (histograms) of levels of RGB signals when unprinted portions of one hundred paper sheets P are actually read. The abscissa of the graph is for numeric values that signal voltages obtained from the sensors are expressed at 100 levels, which denotes that a value closer to 100 is a greater output from a sensor. The ordinate shows frequency of occurrence at the respective levels. Here, to focus on, for example, outputs from the red sensor, those are distributed so as to be:

at signal level 86; 18 times
at signal level 87; 20 times
at signal level 88; 17 times
at signal level 89; 13 times and, it is clear that an average signal level (a peak among the signal levels) of the red signals from the paper sheets P is about 87. In the same manner, it is clear that there are centers in the distributions such that an average signal level (a peak) among the blue signals is about 44, and an average signal level (a peak) among the green signals is about 71.

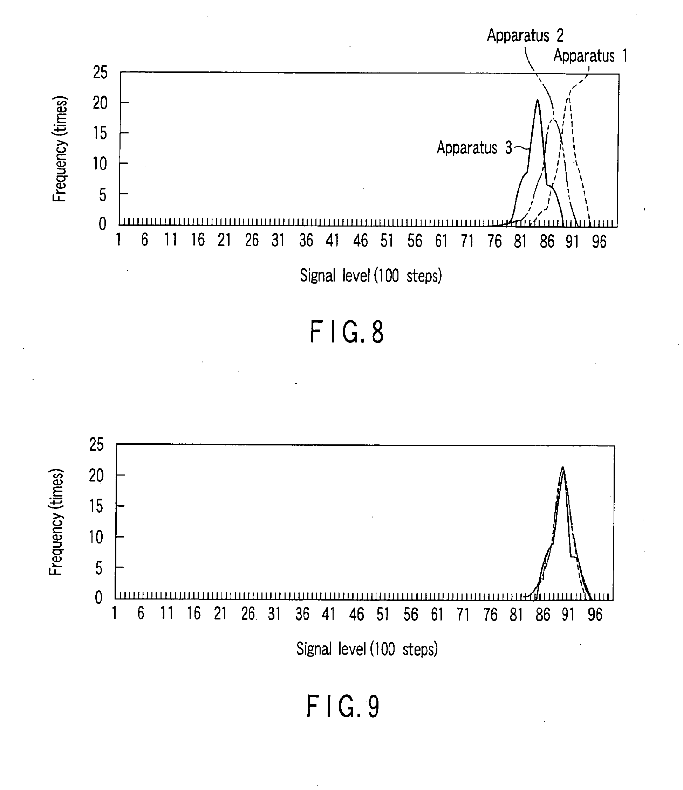

In this way, the histograms exemplified in FIG. 7 show numeric values obtained in such a manner that one hundred paper sheets P are sensed by the image sensing unit built into the inspection unit 10 of a specific type of the processing apparatus 1. However, when those are measured by a plurality of processing apparatuses 1, shifts are brought about in the frequency distributions of the signal levels in some cases. Namely, there is the possibility that the frequency distributions of the color outputs vary in accordance with differences in the characteristics of the optical systems in the image sensing unit. One example thereof is shown in FIG. 8.

FIG. 8 shows histograms of red signals output from the image sensing units built in the inspection units 10 of the three processing apparatuses 1 so as to be superimposed, and peaks of the signal levels are respectively:

in the apparatus 1; signal level 90
in the apparatus 2; signal level 87
in the apparatus 3; signal level 84.

It is clear that there is a difference of 6 levels at a maximum among the three apparatuses.

Usually, sensitivity corrections (shading corrections) for each of RGB including the characteristics of all optical parts are executed onto the optical systems for use in the inspection units 10 of the processing apparatuses 1 by using a reference medium, for example, a white ceramic board or the like. For this reason, such differences among the apparatuses must not be brought about. However, slight differences among the spectral characteristics of the optical parts cannot be completely corrected even by using a white reference board in some cases. Therefore, a method in which data of the paper sheets P to be objects are collected in respective apparatuses, and corrections are carried out by founding the centers of the distributions of the respective paper sheets P, is used. For example, assume that the apparatus 1 is a reference apparatus. Variations among the apparatuses are corrected by applying the operation:

```
signal level after correction = signal level
before correction x 90/87 with respect to a red signal
from the apparatus 2,
```

and

in the same manner, variations among the apparatuses are corrected by applying the operation:

```
signal level after correction = signal level
before correction × 90/84 with respect to a red signal
from the apparatus 3.
```

The frequency distributions of red signal levels in the respective apparatuses after the correction are shown in FIG. 9. As a consequence, it is clear that the peaks of the signal levels in the three apparatuses are corrected so as to be substantially overlapped onto each other. However, in practice, it is necessary to execute the above-described corrections every time a type of the paper sheets P to be objects is changed. This is caused by differences in the spectral reflectance characteristics of the respective paper sheets P.

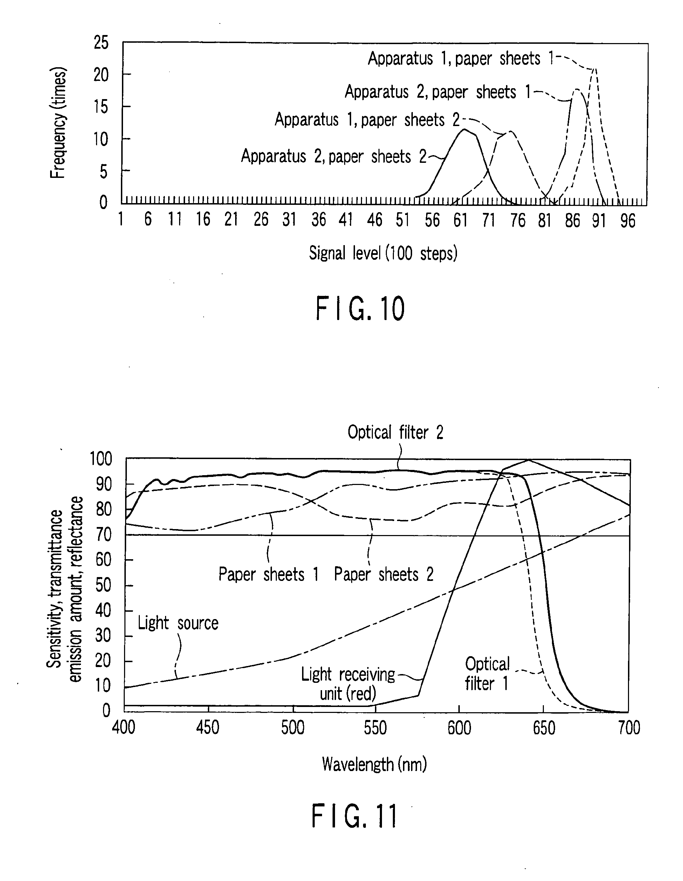

FIG. 10 shows an example of the frequency distributions of paper sheets 1 and paper sheets 2 in two certain processing apparatuses (the apparatus 1 and the apparatus 2). In this example, peaks of the frequency distributions of the respective signal levels are as follows:

In the apparatus 1, the paper sheets 1; signal level 90
In the apparatus 2, the paper sheets 1; signal level 87
In the apparatus 1, the paper sheets 2; signal level 75
In the apparatus 2, the paper sheets 2; signal level 65

Assuming that the apparatus 1 is a reference apparatus, correction coefficients of the respective paper sheets are as follows.

Paper sheets 1: 90/87 = 1.034
Paper sheets 2: 75/65 = 1.154

Thus, it is clear that the correction coefficients are completely different from each other in accordance with a type of the paper sheets P.

When there is no difference between the correction coefficients in accordance with a type of the paper sheets P, only the paper sheets 1, for example, are fed into an apparatus, a correction coefficient (1.034) is stored in the apparatus, and it suffices to apply the correction coefficient to the other types of the paper sheets P. In practice, differences according to the types of the paper sheets P are generated in many cases as in the example of FIG. 10. Namely, in order to perform highly-precise individual correction, it is necessary to feed all types of the paper sheets P to be inspection objects into each apparatus of the processing apparatuses 1, collect data thereof, and calculate a correction coefficient for each type of the paper sheets P to thereby store a correction coefficient for each apparatus body, which will be complicated from the standpoint of managing the apparatus bodies in many cases. Moreover, when an entire optical system or some of parts configuring the optical system in an image sensing unit are exchanged due to a failure in an apparatus or the like, it is necessary to execute correction using the paper sheets P every time in the same manner as described above, which costs enormously and takes huge amount of time for maintenance.

Moreover, the cause by which differences are brought about in signal levels among apparatus bodies will be considered.

As described above, color ratios among output signals from the sensors can be obtained by integration values of the spectral characteristics of the optical parts (components) configuring the optical system. For this reason, when there are even one component whose spectral characteristic is unstable among the plurality of optical parts, inspection results in the case where the paper sheets P in a same type are inspected by different apparatus bodies are made different from one another.

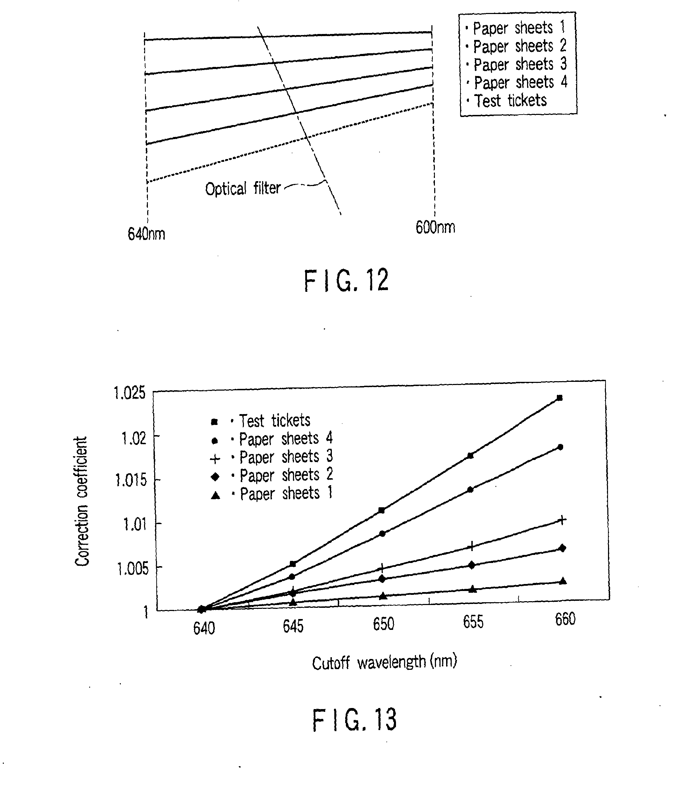

FIG. 11 exemplifies characteristics of the two optical filters 42 with different spectral transmittance characteristics. Variations in outputs of red signals due to a difference in the characteristics of the optical filters 42 are shown in the graph descried in FIG. 10. Namely, an optical filter 1 is used in the apparatus 1, and an optical filter 2 is used in the apparatus 2.

In the apparatus 2 using the optical filter 2, a difference in the peaks of signal levels between the two types of paper sheets is greater than that in the apparatus 1 using the optical filter 1. This is caused by a difference in wavelength characteristics of the paper sheets 1 and the paper sheets 2 in the vicinity of a cutoff wavelength (650 nm) of the optical filters. The paper sheets 1 show a substantially flat reflectance characteristic. However, in the paper sheets 2, the longer the wavelength is, the higher the reflectance is. More specifically, the greater the difference in the cutoff wavelengths of the optical filters 42 in the two apparatuses is, the more the output difference between the two apparatuses increases.

FIG. 2 shows one example of the spectral reflectance characteristics of five types of paper sheets P in the vicinity of the cutoff wavelength (640 to 660 nm) of the optical filter 42. As described above, sensitivity correction has been executed to the optical system by using a general reference medium, for example, a white ceramic board or the like. A wavelength characteristic of the reference board is substantially flat in a visible region, and the paper sheets 1 of FIG. 12 have substantially the same flatness as that of the reference board.

Namely, the paper sheets 1 are less subject to variations in a cutoff wavelength of the optical filter 42. As the paper sheets 2, 3, and 4 progressed, the wavelength characteristics slope upward to the right, and therefore, the paper sheets are made easier to be subject to variations in a cutoff wavelength.

For example, assume that in the two apparatuses respectively, a cutoff wavelength of the apparatus 1 is 660 nm, and a cutoff wavelength of the apparatus 2 is 640 nm. On the basis of a white reference board, substantially the same output values can be obtained in the both apparatuses with respect to the paper sheets 1. However, with respect to the paper sheets 5, the apparatus 1 with a longer cutoff wavelength show a higher value. Namely, when same paper sheets are respectively read by two apparatuses corrected with white reference boards having the same characteristic, data values are made different from one another due to a difference in the spectral sensitivity characteristics of the optical filters. In particular, when it is discriminated whether the paper sheets P are write or damaged on the basis of image data, deterioration in the performance due to a difference between the apparatus bodies is made problematic in many cases.

Therefore, the present embodiment is designed such that variations in the performances between the apparatus bodies can be highly precisely and easily corrected in the extreme without measuring detailed characteristics of the optical systems, and without preparing a correction coefficient for each type of the paper sheets P. Hereinafter, the procedure will be described. Description thereof will be given such that variations in the performances between the apparatus bodies are replaced with variations in the characteristics (cutoff wavelengths) of the optical filters.

First, spectral reflectance characteristics of the paper sheets P to be inspection objects are measured by using a measuring instrument such as a spectrophotometer. Similarly, in order to simulate a difference in the characteristics between the apparatus bodies, two types of optical filters with different characteristics are prepared, and spectral transmittance characteristics of the respective optical filters are measured by using a measuring instrument. It is more effective provided that the two types of optical filters to be measured are an upper limit and a lower limit in manufacturing variations.

Next, it is necessary to measure spectral characteristics of the sensor of the light receiving unit 44 and the light source 41. However, because there are no absolute standards in the both usually, and the measurements themselves are difficult, reference spectral characteristic data are acquired from a manufacturer of the devices or the like. When it is possible to collect data in any way, the data may be used. Further, when it is possible to acquire spectral characteristics of the optical filters 42 and the paper sheets P as data, those may be used.

Next, a spectral characteristic when cutoff wavelengths of the optical filters 42 are allocated within a range of variations in characteristics of the optical filters 42 is obtained by interpolation or the like. Here, an integration value (in practice, a sum of products for each wavelength) in consideration of the light source 41, the paper sheets P, the optical filter 42, and the light sensitive sensor 44 is obtained by using the formula described above. Parameters in the embodiment are cutoff wavelengths of the optical filters 42 and types of the paper sheets P. Namely, here, a correction coefficient according to a difference in cutoff wavelengths is obtained for each type of the paper sheets P, and a correction coefficient table is prepared. FIG. 13 shows one example of relationships between a cutoff wavelength and a correction coefficient for each type of the paper sheets P. In the graph shown in FIG. 13, it is clear that the longer the cutoff wavelength is, the greater the correction coefficient is, on the basis of 640 nm with respect to all the types of the paper sheets P. Further, it is clear that the more the spectral characteristics in the vicinity of the cutoff wavelengths are different from the white reference board, the greater the correction coefficients are.

Next, test tickets whose correction coefficients are greater than that of the paper sheets with a maximum correction coefficient (which are the paper sheets 4 in this example) are prepared, and a correction coefficient thereof is calculated in the same manner to be added to the correction table of FIG. 13 described above. Moreover, the test tickets are fed into the apparatus body (the apparatus 1) which is a standard for correction, and an output value (Torg) from the reference apparatus is recorded. This is the end of the advance preparation.

Hereinafter, description will be given to a method by which other apparatuses than a reference apparatus are corrected so as to have substantially the characteristic as that of the reference apparatus by using the above-described correction table.

The above-described test tickets are fed into an apparatus body (here, the apparatus 2) whose characteristic must be corrected, and an output value (td1) is measured in the same manner as the reference apparatus. Then, Td1/Torg is obtained, correction coefficients of the respective paper sheets with respect to a ratio of the test tickets are specified on the correction table, and those are stored in an internal storage device of the apparatus 2. Namely, a ratio of output data by the test tickets with respect to the reference apparatus is calculated, and a correction table for the apparatus 2 is prepared by reflecting the operation result onto all the types of the paper sheets.

When the apparatus 2 is actually operated, the above-described correction coefficient in the correction table prepared in advance is read on the basis of a type of the paper sheets P to be processing objects, and image data read from the actual paper sheets P is corrected by using the read correction coefficient, which makes it possible to provide substantially the same correction reference as that of the reference apparatus.

As described above, in accordance with the embodiment, correction coefficients of all the types of the paper sheets P are prepared by feeding the test tickets into the reference apparatus, and the test tickets are fed into another apparatus body to compare an output level thereof with that of the reference apparatus, so that the above-described correction coefficients are adjusted on the basis of a ratio therebetween, which is made to be a correction reference for the apparatus body. As a consequence, in accordance with the embodiment, there is no need to measure detailed characteristics of an optical system of an image sensing unit in another apparatus body whose correction reference is matched to that of the reference apparatus as in the prior art. Therefore, there is no need to prepare a correction coefficient for each type of paper sheets, which makes it possible to comparatively-easily prepare a correction reference of the other apparatus body, and it is possible to provide a highly-precise correction reference.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

For example, the above-described embodiment has described the correction method when a cutoff wavelength of the optical filter 42 differs. However, the present invention is not limited to a case a characteristic of the optical filter 42 is changed, and the invention can be applied to a case in which spectral a sensitivity characteristic of a color filter (not shown) of the light sensitive element 44 differs, a case in which a spectral emission amount characteristic of the light source 41 differs due to differences in color temperature characteristics, or a case in which a spectral transmittance characteristic of the optical lens 43 differs, or the like, and a same correction method can be achieved.

Further, in the embodiment described above, image data which are the basis for discriminating stain conditions of the paper sheets P have been acquired by using a reflected image. However, the present invention is not limited thereto, and for example, the same effect can be obtained by using a transparent image of the paper sheets P as well.

The embodiment also has described the case in which one type of test tickets are used as media for test. However, the present invention is not limited thereto, and for example, test tickets having substantially the same characteristic as that of the paper sheets P to be inspection objects may be used. Further, types of the test tickets are not limited to one type, and a plurality of types of test tickets may be used and those may be prepared for each type of the paper sheets P. Further, in the embodiment described above, the test tickets with sensitivity higher than that of the plurality of types of paper sheets P to be inspection objects have been used. However, it is not necessary to use test tickets with sensitivity higher than that of the paper sheets P to be inspection objects.

Furthermore, the test tickets have been used in the embodiment described above. For example, provided that correction is performed by using the paper sheets P themselves which are most subject to wavelength characteristics among the paper sheets to be objects, the same effect can be obtained.

Moreover, the description has been made such that the correction coefficients serving as correction references are prepared as a correction table. However, at the time of actual operation, a correction table is not prepared, and an internal arithmetic expression is changed every time a type of the paper sheets P is determined, and a correction coefficient may be prepared by calculating in each case by using the arithmetic expression. Consequently, the same effect can be obtained.

**Claims**

1.  A paper sheet discrimination apparatus comprising:

    a detection unit (21, 22, 23) which optically detects paper sheets;
    a discrimination unit (20) which discriminates stain conditions of the paper sheets on the basis of a detection result by the detection unit; and
    a storage unit (200) in which a correction coefficient for correcting variations in discrimination performances between different apparatuses is stored in advance for each type of the paper sheets, **characterized in that**
    the correction coefficient is prepared for each type of the paper sheets by using a correlation between a detection result obtained by detecting a specific type of reference paper sheets by the detection unit (21, 22, 23) of an apparatus serving as a standard for correction, and a detection result obtained by detecting the reference paper sheets by the detection unit (21, 22, 23) of the apparatus to be a correction object, and
    the discrimination unit (20) reads a correction coefficient corresponding to a type of the paper sheets detected by the detection unit (21, 22, 23) from the storage unit (200), and discriminates stain conditions of the paper sheets by using the correction coefficient.

2.  The paper sheet discrimination apparatus according to claim 1, **characterized in that**

the detection unit (21, 22, 23) detects transparent images or reflected images of paper sheets.

3. The paper sheet discrimination apparatus according to claim 1 or claim 2, **characterized in that**

the reference paper sheets are test tickets prepared for correction in addition to paper sheets tobe discrimination objects.

4. The paper sheet discrimination apparatus according to claim 3, **characterized in that**

the test tickets are prepared in a plurality of types in accordance with a type of the paper sheets to be discrimination objects.

5. The paper sheet discrimination apparatus according to any one of the preceding claims, **characterized in that**

the reference paper sheets are one type of the paper sheets to be discrimination objects.

6. The paper sheet discrimination apparatus according to any one of the preceding claims, **characterized in that**

the reference paper sheets are plural types of paper sheets among the paper sheets to be discrimination objects.

7. The paper sheet discrimination apparatus according to any one of the preceding claims, **characterized in that**

an optical system of the detection unit (21, 22, 23) has a plurality of optical parts (41, 42, 43, 44), and the variations in discrimination performances are caused by differences in spectral characteristics of the optical parts (41, 42, 43, 44).

8. A paper sheet processing apparatus comprising: a throw-in unit (2) in which plural paper sheets are thrown;

a fetching unit (4) which fetches the thrown paper sheets one by one on a carrier path (3);
a carrier unit (12, 13) which carries the fetched paper sheets;
a detection unit (21, 22, 23) which optically detects the carried paper sheets;
a discrimination unit (20) which discriminates stain conditions of the paper sheets on the basis of a detection result by the detection unit (21, 22, 23);
a storage unit (200) in which a correction coefficient for correcting variations in discrimination performances between different apparatuses is stored in advance for each type of the paper sheets, and
sorting and collecting units (8a to 8f) which sort and collect the paper sheets on the basis of a discriminated result by the discrimination unit, **characterized in that**
the correction coefficient is prepared for each type of the paper sheets by using a correlation between a detection result obtained by detecting a specific type of reference paper sheets by the detection unit (21, 22, 23) of an apparatus serving as a standard for correction, and a detection result obtained by detecting the reference paper sheets by the detection unit (21, 22, 23) of the apparatus to be a correction object, and
the discrimination unit (20) reads a correction coefficient corresponding to a type of the paper sheets detected by the detection unit (21, 22, 23) from the storage unit (200), and discriminates stain conditions of the paper sheets by using the correction coefficient.

9. The paper sheet processing apparatus according to claim 8, **characterized in that**

the detection unit (21, 22, 23) detects transparent images or reflected images of paper sheets.

10. The paper sheet processing apparatus according to claim 8 or claim 9, **characterized in that**

the reference paper sheets are test tickets prepared for correction in addition to paper sheets to be discrimination objects.

11. The paper sheet processing apparatus according to claim 10, **characterized in that**

the test tickets are prepared in a plurality of types in accordance with a type of the paper sheets to be discrimination objects.

12. The paper sheet processing apparatus according to any one of the preceding claims 8 to 11, **characterized in that** the reference paper sheets are one type of the paper sheets to be discrimination objects.

13. The paper sheet processing apparatus according to any one of the preceding claims 8 to 12, **characterized in that**

the reference paper sheets are plural types of paper sheets among the paper sheets to be discrimination objects.

14. The paper sheet processing apparatus according to any one of the preceding claims 8 to 13, **characterized in that**

an optical system of the detection unit (21, 22, 23) has a plurality of optical parts (41, 42, 43, 44), and the variations in discrimination performances are caused by differences in spectral characteristics of the optical parts (41, 42, 43, 44).

15. A paper sheet discrimination method **characterized by** comprising:

a storage step of storing a correction coefficient in an apparatus serving as a standard for correction, which is calculated in advance for each type of paper sheets by using a correlation between a detection result obtained by detecting a specific type of reference paper sheets by the detection unit (21, 22, 23) of the apparatus, and a detection result obtained by optically detecting the reference paper sheets by the detection unit (21, 22, 23) of the apparatus to be a correction object, and a detection step of optically detecting paper sheets by the detection unit (21, 22, 23) of the apparatus; and a discrimination step of reading a correction coefficient stored in advance in the storage step so as to correspond to a type of the paper sheets detected in the detection step, and of discriminating stain conditions of the paper sheets by correcting a detection result in the detection step by using the correction coefficient.

16. The paper sheet discrimination method according to claim 15, **characterized in that**

transparent images or reflected images of paper sheets are detected in the detection step.

17. The paper sheet discrimination method according to claim 15 or claim 16, **characterized in that**

the reference paper sheets are test tickets prepared for correction in addition to paper sheets to be discrimination objects.

18. The paper sheet discrimination method according to claim 17, **characterized in that**

the test tickets are prepared in a plurality of types in accordance with a type of the paper sheets to be discrimination objects.

19. The paper sheet discrimination method according to any one of the preceding claims 15 to 18, **characterized in that**

the reference paper sheets are one type of the paper sheets to be discrimination objects.

20. The paper sheet discrimination method according to any one of the preceding claims 15 to 19, **characterized in that**

the reference paper sheets are plural types of paper sheets among the paper sheets to be discrimination objects.

21. The paper sheet discrimination method according to any one of the preceding claims 15 to 21, **characterized in that**

an optical system of the detection unit (21, 22, 23) has a plurality of optical parts (41, 42, 43, 44), and the variations in discrimination performances are caused by differences in spectral characteristics of the optical parts (41, 42, 43, 44).

FIG. 1

FIG. 2

FIG.3

FIG. 4

FIG. 5

FIG. 6

FIG. 7

F I G. 8

F I G. 9

FIG. 10

FIG. 11

- Paper sheets 1
- Paper sheets 2
- Paper sheets 3
- Paper sheets 4
- Test tickets

640nm    Optical filter    600nm

FIG. 12

FIG. 13

European Patent
Office

**EUROPEAN SEARCH REPORT**

Application Number

EP 06 02 5264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 324 278 A (MARS INC [US]) 2 July 2003 (2003-07-02) * abstract * * paragraph [0001] * * paragraph [0019] * * paragraph [0025] - paragraph [0027] * * paragraph [0033] * * paragraph [0058] - paragraph [0061] * * paragraph [0066] - paragraph [0067] * * paragraph [0083] - paragraph [0087] * * claims 1-8; figures 1,4,5 * ----- | 1-21 | INV. G07D7/12 G07D7/00 |
| X | US 2001/035603 A1 (GRAVES BRADFORD T [US] ET AL) 1 November 2001 (2001-11-01) * paragraph [0041] * * paragraph [0063] - paragraph [0064] * * paragraph [0076] * * paragraph [0112] - paragraph [0113] * ----- | 1-21 | |
| A | WO 03/036572 A2 (GIESECKE & DEVRIENT GMBH [DE]; SMITH PAUL [DE]; STEIN DIETER [DE]; WUN) 1 May 2003 (2003-05-01) * abstract * * page 1, line 1 - page 2, line 3 * * page 6, line 5 - page 7, line 11 * * claims 7-9 * ----- | 1-21 | TECHNICAL FIELDS SEARCHED (IPC) G07D |
| A | WO 2004/027718 A (GIESECKE & DEVRIENT GMBH [DE]; HOLL NORBERT [DE]) 1 April 2004 (2004-04-01) * page 4, line 15 - page 5, line 29 * * page 8, line 9 - line 19 * * page 10, line 1 - page 11, line 5 * ----- | 1-21 | |

The present search report has been drawn up for all claims

| Place of search | Date of completion of the search | Examiner |
|---|---|---|
| Munich | 9 March 2007 | Königer, Axel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 02 5264

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2007

| Patent document cited in search report | | Publication date | Patent family member(s) | | Publication date |
|---|---|---|---|---|---|
| EP 1324278 | A | 02-07-2003 | CN | 1442832 A | 17-09-2003 |
| | | | JP | 2003263668 A | 19-09-2003 |
| | | | US | 2003121755 A1 | 03-07-2003 |
| US 2001035603 | A1 | 01-11-2001 | NONE | | |
| WO 03036572 | A2 | 01-05-2003 | AU | 2002346956 A1 | 06-05-2003 |
| | | | DE | 10151854 A1 | 08-05-2003 |
| | | | EP | 1444661 A2 | 11-08-2004 |
| WO 2004027718 | A | 01-04-2004 | AU | 2003270195 A1 | 08-04-2004 |
| | | | CN | 1682250 A | 12-10-2005 |
| | | | DE | 10243051 A1 | 25-03-2004 |
| | | | EP | 1602083 A1 | 07-12-2005 |
| | | | US | 2006140468 A1 | 29-06-2006 |

EPO FORM P0459

For more details about this annex : see Official Journal of the European Patent Office, No. 12/82

**EP 1 798 693 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003099837 A